# EUROPÄISCHE PATENTSCHRIFT

(11) **EP 0 534 487 B1**
(45) Veröffentlichungstag und Bekanntmachung des Hinweises auf die Patenterteilung: **08.01.1997**
(21) Anmeldenummer: 92116551.0
(22) Anmeldetag: 25.09.1992
(51) Int. Cl.: B67D 5/06

(54) **Anordnung zum Rückführen von Kohlenwasserstoffen bei Kraftstoffbetankungsanlagen**
Vapor recovery arrangement for gasoline dispensing installation
Système de récupération de vapeurs d'hydrocarbures pour installations de remplissage en carburant

(30) Priorität: 25.09.1991 DE 4131976
(43) Veröffentlichungstag der Anmeldung: 31.03.1993
(73) Patentinhaber: ROSS EUROPA GmbH, D-63225 Langen (DE)
(72) Erfinder: Stroh, Wilfried, W-6073 Egelsbach (DE)
(74) Vertreter: Hauck, Hans, Dipl.-Ing.

(56) Entgegenhaltungen:
- DE-A- 3 903 603
- DE-U- 8 717 378
- US-A- 4 057 085
- US-A- 5 040 577

## Beschreibung

Die Erfindung betrifft eine Anordnung zum Rückführen von Kohlenwasserstoffen bei Kraftstoffbetankungsanlagen.

Beim Betanken von Kraftstoff, insbesondere beim Betanken von Kraftfahrzeugen mit Zapfpistole wird infolge des niedrigen Dampfdruckes des Kraftstoffes in dem zu betankenden Vorratsbehälter ein Teil des eintretenden Kraftstoffes verdampft und gelangt durch den Kraftstoffeinfüllstutzen in die Atmosphäre. Dies soll vor allem wegen der krebserzeugenden Eigenschaften der Kohlenwasserstoffgase verhindert werden. Zu diesem Zweck ist ein Gasrückführungssystem vorgesehen, das zukünftig an allen Zapfstellen eingesetzt werden soll und mit dem die beim Betanken entstehenden Gase durch eine Leitung zum Kraftstofftank zurückgeführt werden, aus dem der Kraftstoff zum Betanken entnommen wird. Man geht davon aus, daß der Kraftstoffvolumenstrom in dem zu betankenden Vorratsbehälter etwa gleich dem in den Kraftstofftank zurückzuführenden Gasvolumenstrom ist.

Hierzu ist es bekannt (US-A 5,040,577) in der Gasrückführleitung eine Vakuumpumpe zum Absaugen der entstehenden Dämpfe und außerdem ein Ventil vorzusehen, das von einem Mikroprozessor mit einem Fehlersignal angesteuert wird, das aus einem den Sollwert für den Volumenstrom des Kraftstoffs und einem den rückströmenden Gasvolumenstrom messenden Istwert gebildet ist. Dieser Istwert wird entweder aus dem am Einlaß der Vakuumpumpe gemessenen Gasdruck oder von einem Gasdurchflußmeßgerät ermittelt.

Der Erfindung liegt die Aufgabe zugrunde, eine Anordnung der eingangs geschilderten Art so weiterzubilden, daß die Regelung des Gasvolumenstroms mit höherer Genauigkeit und Zuverlässigkeit erfolgt.

Erfindungsgemäß ist die Aufgabe durch die Merkmale des Patentanspruches 1 gelöst. Vorteilhafte Weiterbildungen ergeben sich aus den Unteransprüchen.

Erfindungsgemäß erfolgt die Volumenstromregelung der beim Betanken entstehenden und abgesaugten Dämpfe durch ein Proportionaldrosselventil und wird der rückgeführte Gasvolumenstrom mittels der von dem Differenzdruckmesser gelieferten beiden Meßwerte und dem Drosselquerschnitt am Proportionaldrosselventil ermittelt. Damit kann die Feinfühligkeit des Systems optimiert werden und können sogar geringe Kraftstoffmengen, die sich z.B. bei vollem Tank in der Gasrückführleitung befinden oder auch nur eine mangelnde Leistung der Vakuumpumpe erkannt und ausgewertet werden.

Zusätzlich kann der atmosphärische Luftdruck gemessen werden und das Ansteuersignal somit abhängig vom atmosphärischen Luftdruck korrigiert werden. Dadurch wird die Genauigkeit der Gasvolumenregelung weiter erhöht, da die Gasrückführung vom Druckunterschied zwischen dem atmosphärischen Luftdruck und dem Vakuumdruck abhängig ist.

Wie vorstehend erwähnt, soll in vielen Fällen der rückgeführte Gasvolumenstrom gleich dem zugeführten Kraftstoffvolumenstrom sein. Dieses Verhältnis läßt sich aber ändern, indem das Signal des elektronischen Zählwerks der Zapfstelle entsprechend verändert wird, so daß sich entsprechend höhere oder geringere Gasvolumenströme einregeln lassen. Ferner kann das Propotionaldrosselventil auch zusätzlich abhängig von der zu messenden Lufttemperatur eingestellt werden. So kann der Gasvolumenstrom verringert werden wenn bei niedriger Lufttemperatur weniger Kraftstoff vergast.

Mit der erfindungsgemäßen Anordnung wird auch der Vorteil erzielt, daß sowohl Schwankungen im Vakuumbereich des Systems als auch Druckluftschwankungen im atmosphärischen Bereich erfaßt werden und die Ansteuerung des Proportionaldrosselventils entsprechend korrigiert werden kann.

Die erfindungsgemäße Bauweise des Proportionaldrosselventils führt zu einer hohen Regelgenauigkeit. Außerdem ist das Ventil vielseitig und unter erschwerten Außenbedingungen einsetzbar. Das Ventil weist eine geringe Hysterese der Regelkennlinie auf, um eine zu große Umweltbelastung durch die rückströmenden Kraftstoffdämpfe aus der Erdtankentlüftung zu vermeiden. Außerdem ist das Ventil bezüglich der hochexplosiven Benzoldämpfe explosionsgeschützt und kann in Betankungsanlagen (im unteren, nicht feuchtigkeitsgeschützten Bereich) eingebaut werden.

Durch die erfindungsgemäß vorgesehene Doppelkolbenanordnung ergibt sich eine einwandfreie zentrische Führung des Ventilgliedes, so daß auf die beweglichen Teile des Ventils nur sehr geringe exzentrische Kräfte wirken können. Das erfindungsgemäß ausgebildete Proportionalventil hat daher eine Kennlinie mit nur geringer Hysterese. Diese Eigenschaft läßt sich noch durch eine spezielle Dichtung der Kolben im Ventilgehäuse sowie durch eine reibungsarme Ausgestaltung der Führungsflächen der Dichtung verbessern.

Die im Bereich der Durchtrittsöffnung und der Verbindungsstange vorgesehen Drossel, die vorzugsweise von dem Ringspalt zwischen der Verbindungsstange und der Innenwand der Durchtrittsöffnung gebildet wird, begrenzt auch bei maximaler Öffnung des Ventils den Strömungsdurchsatz, wodurch zum Beispiel bei Einsatz in einer Kraftstofftankanlage ein Schutz gegen eine zu starke Umweltbelastung durch die Tankentlüftung sichergestellt wird.

Die Doppelkolbenanordnung eignet sich dazu, über ein Kraftübertragungsglied z.B. in Form eines Stößels mit einem auswechselbar angeordneten Antrieb verbunden zu werden, so daß der Antrieb wahlweise als elektromagnetischer oder mechanischer oder fluidtechnischer Antrieb ausgebildet werden kann. Vorzugsweise sind das Ventilgehäuse und der Antrieb durch einen Zwischenkörper räumlich voneinander getrennt. Dieser Zwischenkörper wirkt als thermische Isolierung zwischen dem Antrieb und dem eigentlichen Ventil.

Das erfindungsgemäß ausgebildete Proportionalventil ist besonders geeignet für einen Einsatz in Kraftstofftankanlagen, bei denen es zum Rückführen von im Fahrzeugtank beim Betanken entstehenden Kraftstoffdämpfen dient. Hierdurch ist es möglich, die hochgradig krebserregenden Benzoldämpfe für die Umwelt unschädlich zu machen und sie als Sekundärrohstoff wiederzuverwenden. Das Proportionsalventil wird sowohl den an den Explosionsschutz zu stellenden hohen Anforderungen wie auch den schwierigen Einsatzbedingungen in Betankungsanlagen gerecht.

Ein Ausführungsbeispiel der Erfindung ist anhand der Zeichnungen näher erläutert. Es zeigt:
- Fig. 1: eine schematische Darstellung des Gasrückführsystems in einer Kraftstoffbetankungsanlage;
- Fig. 2: einen Längsschnitt durch ein Proportionalventil mit einem explosionsgeschützten Elektromagneten;
- Fig. 3: eine Seitenansicht auf den unteren Teil des Ventilgehäuses des Proportionalventils nach Fig. 1;
- Fig. 4: die Durchsatzkennlinie des Proportionalventils;
- Fig. 5: die Magnetkraftkennlinie des Proportionalventils;

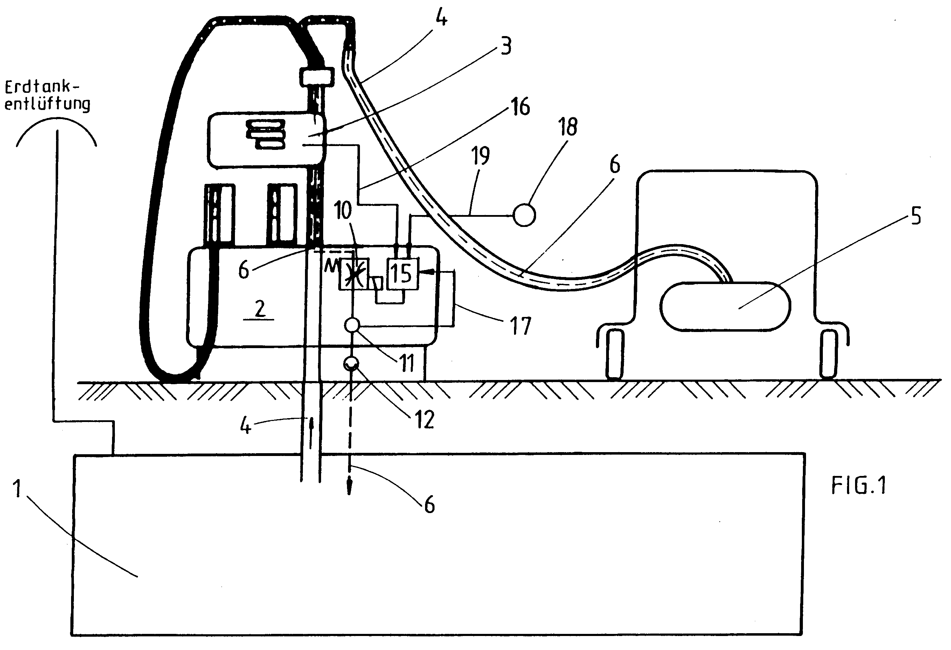

In Fig. 1 wird aus einem Erdtank 1 über eine Zapfstelle 2 mit nicht dargestellter Kraftstoffpumpe und elektronischem Zählwerk 3 Kraftstoff durch eine Kraftstoffleitung 4 in einen zu betankenden Vorratsbehälter 5 gepumpt. Dabei entstehen im Vorratsbehälter 5 Kraftstoffdämpfe, nämlich Kohlenwasserstoffgase, die über eine Gasrückführungsleitung 6 zum Erdtank 1 zurückgeführt werden. In dieser Leitung 6 sind ein Proportionaldrosselventil 10, ein Gasstromvolumen-Meßwertaufnehmer 11 und eine Vakuumpume 12 angeordnet.

Bei Betankungsanlagen für Kraftfahrzeuge mit bleifreien Kraftstoffen sind die Leitungen 4, 6 als koaxiale Schläuche ausgebildet, die über die Zapfpistole in den Einfüllstutzen des Vorratsbehälters 5 eintreten, wobei die äußere Leitung vom Kraftstoff durchflossen wird und die Gase durch die innere Leitung 6 abgeführt werden.

Das Proportionaldrosselventil 10 ist an einen Regelverstärker 15 bzw. eine Elektroniksteuerung angeschlossen. Das elektronische Zählwerk 3 liefert elektrische Impulse, deren Frequenz vom Kraftstoffvolumenstrom abhängig ist. Dieses Signal wird als Sollwert über die Leitung 16 dem Regelverstärker 15 zugeführt. Der in der Leitung 6 zurückgeführte Gasvolumenstrom wird in dem Meßwertaufnehmer 11 gemessen, dessen Ausgangssignal als Istwert über die Leitung 17 zum Regelverstärker 15 gelangt. In dem Regelverstärker 15 wird aus dem Sollwert und dem Istwert die Regelabweichung gebildet, die als Ansteuersignal für das Proportionaldrosselventil dient. Somit wird der zurückgeführte Gasvolumenstrom geregelt und kann auf ein bestimmtes Verhältnis zwischen Volumenstrom des Kraftstoffs und Volumenstrom der Gase eingestellt werden. Diese Verhältnis kann 1:1 betragen, jedoch auch hiervon abweichen, indem im Regelverstärker 15 der Sollwert mit einem willkürlich einzustellenden Multiplikationsfaktor verändert wird.

Außerdem können zur Ansteuerung des Ventils 10 weitere Parameter bzw. Störgrößen berücksichtigt werden, z.B. der atmosphärische Luftdruck, der in einem Luftdruckmesser 18 gemessen und dem Regelverstärker 15 als Korrekturwert für die Regelabweichung über eine Leitung 19 zugeführt wird. Steigt beispielsweise der atmosphärische Luftdruck, so erhöht sich der Druckunterschied zwischen dem Luftdruck und dem Vakuumdruck in der Leitung 6 bzw. dem Tank 1 und entsprechend wird das Ventil 10 stärker gedrosselt, um den Volumenstrom zu verringern. Bei niedriger Außentemperatur wird weniger Kraftstoff verdampft, so daß auch in diesem Fall das Ventil 10 stärker angedrosselt werden kann, um der Außentemperatur Rechnung zu tragen. Zusätzlich kann auch der Druck im Vakuumsystem erfaßt und als Störgröße dem Regler zugeführt werden.

Der Meßwertaufnehmer 11 weist nicht dargestellte Drucksensoren auf, von denen jeweils ein Sensor am Einlaß und am Auslaß des Proportionaldrosselventils 10 angeordnet sind. Damit wird der Druckunterschied der Drosselstelle des Ventils gemessen und aus dem Druckunterschied läßt sich in Verbindung mit dem Drosselquerschnitt der Istwert für den Gasvolumenstrom berechnen.

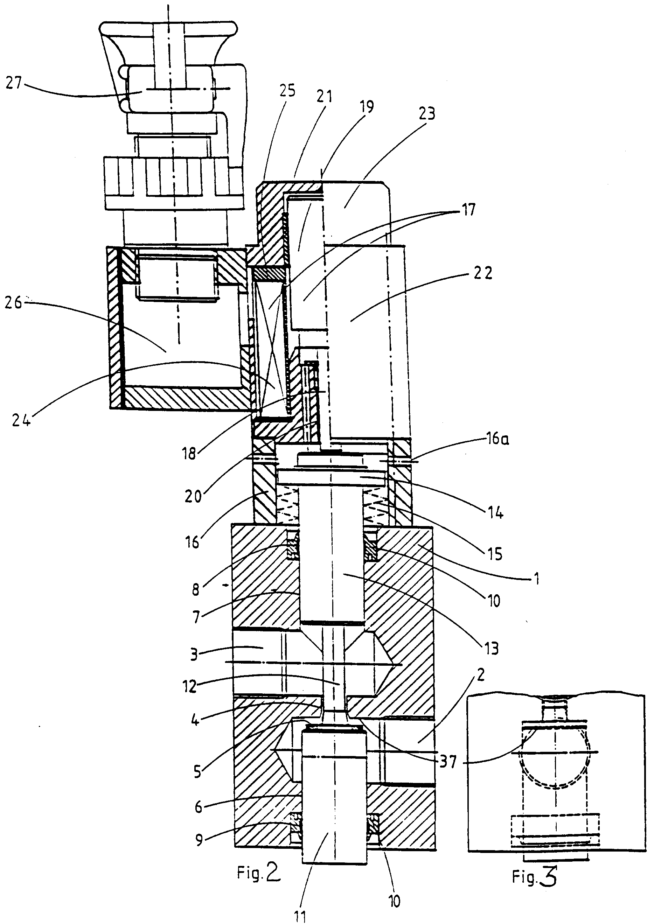

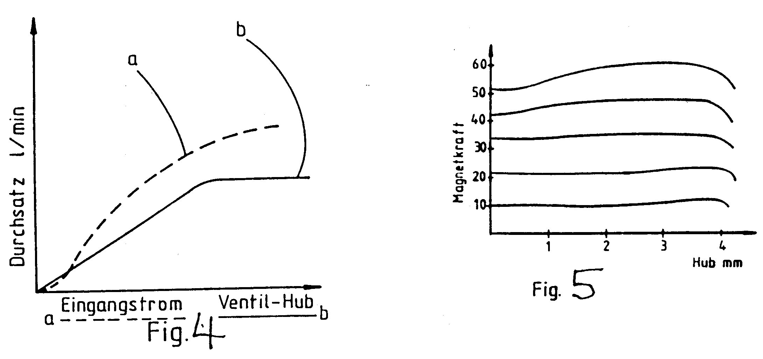

Das in der Figur 2 gezeigte Proportionalventil besitzt ein Ventilgehäuse 1 mit einer Eintrittsöffnung 2 und einer Austrittsöffnung 3 in Form seitlich beabstandeter Bohrungen, die durch eine senkrecht dazu verlaufende Durchtrittsöffnung 4 mit regelbarem Durchflußquerschnitt verbunden sind. Die Eintritts- und Austrittsöffnung 2, 3 sind im dargestellten Ausführungsbeispiel jeweils mit einem Anschlußgewinde versehen, können jedoch auch für andere Anschlußmöglichkeiten, wie Schnellsteckkupplungen oder dgl. ausgeführt sein.

An der Unterseite der Durchtrittsöffnung 4 ist die Bohrungswand der Eintrittsöffnung 2 abgeflacht, um einen die Durchtrittsöffnung 4 umgebenden Ventilsitz 37 zu bilden (vgl. auch Fig. 2). Konzentrisch zur Durchtrittsöffnung 4 sind zwei zylindrische Bohrungen 6 und 7 angeordnet, deren gemeinsame Achse auf den Achsen der die Eintrittsöffnungen 2 und 3 bildenden Bohrungen senkrecht steht und die auf gegenüberliegenden Seiten der Durchtrittsöffnung 4 angeordnet sind. Am äußeren Ende der jeweiligen Bohrung 6, 7 befindet sich je eine ringförmige Ausnehmung 8, 9, in der jeweils ein Dichtelement 10 eingesetzt ist. Jedes der Dichtelemente 10 ist mit zwei Dichtkanten ausgestattet. In den ringförmigen Keil zwischen den beiden Dichtkanten ist zur Verringerung der Reibung ein Gleitmittel ortsunveränderlich eingefügt.

In den beiden Bohrungen 6, 7 ist eine Doppelkolbenanordnung in Form eines unteren Kolbens 11 und eines oberen Kolbens 13 gleitend angeordnet, die durch eine Verbindungsstange 12 miteinander verbunden sind. Die Verbindungsstange 12 ist beispielsweise durch eine Klebverbindung an den Kolben befestigt.

Die beiden Kolben 11, 13 sind durch die Dichtungen 10 in ihren Bohrungen 6, 7 strömungmitteldicht geführt. Der untere Kolben 11 erstreckt sich durch das Ventilgehäuse 1 hindurch ins Freie, so daß seine (in Fig. 1) untere Stirnseite der Atmosphäre ausgesetzt ist.

Die entgegengesetzte Stirnseite des Kolbens 11 ist mit einer ringförmigen Ventildichtung 5 versehen, die mit dem Ventilsitz 37 zusammenwirkt. Die Ventildichtung 5 besteht im dargestellten Ausführungsbeispiel aus einem elastischen Kunststoff-Dichtring, der mittels einer metallischen Scheibe an der zugehörigen Stirnseite des Kolbens 11 befestigt ist. Das Ventilgehäuse 1 besteht aus einem härteren Material als der elastische Dichtring der Ventildichtung 5, so daß die Ventildichtung 5 mit dem am Ventilgehäuse 1 gebildeten Ventilsitz 37 zum Verschließen der Durchtrittsöffnung 4 optimal zusammenwirken kann.

Wie in Fig. 2 zu sehen ist, ist die Verbindungsstange 12 in ihrem an den Kolben 11 angrenzenden Bereich mit einer konusförmigen Dichtfläche versehen, die mit einer entsprechend konisch ausgebildeten Dichtfläche im unteren Teil der Durchtrittsöffnung 4 zusammenwirkt. Wenn die von den Kolben 11, 13 gebildete Doppelkolbenanordnung aus der in Fig. 1 gezeigten Öffnungsstellung nach oben in ihre Schließstellung bewegt wird, wird die Durchtrittsöffnung 4 einerseits durch die Anlage der Dichtung 5 am Ventilsitz 37 und andererseits durch Anlage der Dichtflächen der Verbindungsstange 12 und der Durchtrittsöffnung verschlossen. Durch die in Reihe geschaltete zweifache Abdichtung ergibt sich somit eine hohe Sicherheit hinsichtlich der Schließwirkung des Proportionalventils.

Zwischen der Verbindungsstange 12 und der die Verbindungsstange umgebenden Wand der Durchtrittsöffnung 4 ist ein Ringspalt vorgesehen, durch den bei geöffnetem Ventil das zu regelnde Fluid von der Eintrittsöffnung 2 in die Austrittsöffnung 3 strömt. Dieser Ringspalt wird mit hoher Genauigkeit so bemessen, daß er in der maximalen Öffnungsstellung der Doppelkolbenanordnung 11, 13 eine Drossel bildet, die den Durchsatz des Fluids begrenzt.

Die als Kolbenführung dienenden Bohrungen 6, 7 sind zur Reibungsverringerung und zur Erhöhung der Lebensdauer des Proportionalventils mit einem reibungsmindernden Oberflächenschutz, z.B. einer chemischen Vernickelung ausgestattet. Stattdessen kann in die Bohrung 6, 7 je eine hülsenförmige reibungsarme Kolbenführung eingesetzt sein. Zusätzlich können auch die Führungsflächen der beiden Kolben 11, 13 einer reibungsmindernden Oberflächenbehandlung unterzogen werden; so können sie z.B. eine chemische Vernickelung mit eingelagertem Polytretafluorethylen (PTFE) aufweisen. Durch diese die Reibung der beweglichen Ventilteile mindernden Maßnahmen ergibt sich eine geringe Hysterese in der Regelkennlinie des Proportionalventils.

Der obere Kolben 13 erstreckt sich durch das Ventilgehäuse 1 hindurch nach oben in das Innere eines Zwischenkörpers 16, der am Ventilgehäuse angebracht ist. Das Innere des Zwischenkörpers 16 ist über Öffnungen 16a mit der Atmosphäre verbunden, so daß die außerhalb des Ventilgehäuses 1 liegende Stirnseite des oberen Kolbens 13, wie die untere Stirnseite des unteren Kolbens 11, Atmosphärendruck ausgesetzt ist. An seiner entgegengesetzten Stirnseite ist der obere Kolben 13 dem Druck in der Austrittsöffnung 3 ausgesetzt. Die beiden zylindrisch ausgebildeten Kolben 11, 13 haben den gleichen Durchmesser, so daß ihre mit Strömungsmitteldruck beaufschlagten Stirnseiten denselben Flächeninhalt haben.

Die Doppelkolbenanordnung wird durch ein Rückstellelement in Form einer Feder 15 in Schließrichtung vorgespannt. Die Feder 15 besteht vorzugsweise aus einer Tellerfeder oder Schraubenfeder aus rostfreiem Stahl, die einerseits an der Oberseite des Ventilgehäuses 1 abgestützt ist und andererseits an einem Ringbund 14 des Kolbens 13 angreift, wobei der Zwischenkörper 6 zur Führung und Zentrierung der Feder 15 dient.

Zum Verschieben der Doppelkolbenanordnung ist an der Oberseite des Zwischenkörpers 16 ein Antrieb lösbar angebracht, der über ein Kraftübertragungsglied 18 in Form eines Stößels mit minimalen exzentrischen Kräften auf die Oberseite des Kolbens 13 einwirkt.

Der in Fig. 2 gezeigte Elektromagnet 17 besitzt einen Anker 19 und eine Spule 24, die zum Schutz gegen äußere Einflüsse in einem Magnetgehäuse 22 mit einem Gehäusedeckel 23 untergebracht sind. Die Spule 22 wird hierbei im Magnetgehäuse 22 durch den Gehäusedeckel 23 mit Hilfe eines Distanzstückes 25 gehalten. Um auch im Magnetteil des Proportionalventils eine möglichst geringe Reibung zu erzielen, sind der Stößel 18 und der Anker 19 jeweils in einer Gleitführung 20 bzw. 21 geführt. An das Magnetgehäuse 22 ist zur elektrischen Verbindung des Elektromagneten ein Sicherheitsklemmenkasten 26 mit einer entsprechenden Sicherheitskabeleinführung 27 angebracht.

Zur Erläuterung der Betriebsweise sei angenommen, daß der Elektromagnet 17 stromlos ist, so daß die Doppelkolbenanordnung 11, 13 durch die Feder 15 in ihre Schließstellung gedrückt wird. In der Schließstellung verschließt der als Regelkolben bzw. Verschlußglied dienende untere Kolben 11 die Durchtrittsöffnung 4 über die in Reihe geschaltete doppelte Abdichtung, die einerseits durch Anlage der Dichtung 5 am Ventilsitz 37 und andererseits durch gegenseitige Anlage der konischen Dichtflächen der Verbindungsstange 12 und der Durchtrittsöffnung 4 gebildet wird. Wird nun an den Elektromagneten 17 ein Stromsignal angelegt, so verschiebt der Anker 19 über den Stößel 18 die Doppelkolbenanordnung 11, 13 nach unten in eine Öffnungsstellung (Fig. 2), wobei der Öffnungshub des Kolbens 11 und damit der Durchsatz des durch die Durchtrittsöffnung 4 strömenden Fluids proportional zur Stromstärke des Regelsignals veränderlich ist.

Fig. 4 zeigt ein Durchsatzregel-Diagramm, in dem der Durchsatz über der elektrischen Stromstärke des Elektromagneten bzw. über dem Ventilhub der Doppelkolbenanordnung aufgetragen ist. Hierbei stellt die Kurve a den Volumendurchsatz in Abhängigkeit vom Eingangsstrom und die Kurve b den Volumendurchsatz in Abhängigkeit vom Ventilhub. Durch eine Änderung der Durchtrittsöffnung 4 und/oder der Form der Verbindungsstange 12 kann die Durchsatzregelkennlinie bestimmten Erfordernissen angepaßt werden.

Fig. 5 zeigt eine mögliche Magnetkraftkennlinie des Elektromagneten in Abhängigkeit vom Ventilhub und der Stromstärke bei konstanter Spannungsversorgung.

Da ferner der Ringspalt zwischen der Durchtrittsöffnung 4 und der Verbindungsstange 12 als Drossel ausgebildet ist, ist selbst bei maximal geöffnetem Ventil die durch das Ventil fließende Fluidmenge auf einen vorgegebenen Wert, z.B. 40 l/min beschränkbar.

## Patentansprüche

1. Anordnung zum Rückführen von Kohlenwasserstoffen bei Kraftstoffbetankungsanlagen mit einem in einer Gasrückführungsleitung angeordneten Proportionaldrosselventil (10), das abhängig vom Volumenstrom des zu betankenden Kraftstoffs den zu einem Tank (1) mittels einer Vakuumpumpe (12) rückströmenden Gasvolumenstrom regelt und das von einem Fehlersignal ansteuerbar ist, das aus einem den Sollwert für den Volumenstrom des Kraftstoffs und einem den Gasvolumenstrom messenden Istwert gebildet ist und mit einem stromauf und stromab der Drosselstelle des Proportionaldrosselventils (10) angeordneten Druckaufnehmer, wobei aus dessen Druckunterschied und dem Drosselquerschnitt der Istwert des Gasvolumenstroms berechnet wird.

2. Anordnung nach Anspruch 1, dadurch gekennzeichnet, daß der Sollwert ein von dem elektronischen Zählwerk (3) der Betankungsanlage geliefertes Signal ist.

3. Anordnung nach 1 oder 2, dadurch gekennzeichnet, daß zur Einstellung des Verhältnisses zwischen dem Kraftstoffvolumenstrom und dem Gasvolumenstrom ein Korrekturfaktor für den Sollwert einstellbar ist.

4. Anordnung nach einem der Ansprüche 1 bis 3, dadurch gekennzeichnet, daß das Ansteuersignal für das Proportionaldrosselventil (10) abhängig vom atmosphärischen Luftdruck und/oder vom Vakuumdruck korrigiert wird.

5. Anordnung nach einem der Ansprüche 1 bis 4, dadurch gekennzeichnet, daß das Ansteuersignal für das Proportionaldrosselventil (10) abhängig von der Lufttemperatur korrigiert wird.

6. Anordnung nach einem der Ansprüche 1 bis 5, dadurch gekennzeichnet, daß das Ventilglied des Proportionaldrosselventils (10) als linear verschiebbare Doppelkolbenanordnung mit zwei Kolben (11, 13) ausgebildet ist, die in zueinander fluchtenden Bohrungen (6, 7) des Ventilgehäuses (1) gleitend geführt sind und durch eine die Durchtrittsöffnung (4) durchdringende Verbindungsstange (12) miteinander verbunden sind, wobei der Strömungsweg im Bereich der Durchtrittsöffnung (4) und der Verbindungsstange (12) als den maximalen Strömungsdurchsatz begrenzende Drossel ausgebildet ist.

7. Anordnung nach Anspruch 6, dadurch gekennzeichnet, daß die Doppelkolbenanordnung über ein Kraftübertragungsglied (18) mit dem auswechselbar angeordneten elektromagnetischen Antrieb verbunden ist.

8. Anordnung nach Anspruch 7, dadurch gekennzeichnet, daß das Ventilgehäuse (1) und der Antrieb durch einen Zwischenkörper (16) räumlich voneinander getrennt sind, der die Antriebsverbindung zwischen dem Kraftübertragungsglied (18) und der Doppelkolbenanordnung (11, 13) enthält und an dem der Antrieb lösbar angebracht ist.

9. Anordnung nach Anspruch 7 oder 8, dadurch gekennzeichnet, daß der Zwischenkörper (16) mit Öffnungen (16a) versehen ist, die das Innere des Zwischenkörpers (16) mit der Atmosphäre verbinden.

10. Anordnung nach einem der Ansprüche 6 bis 9, dadurch gekennzeichnet, daß die beiden Kolben (11, 13) auf ihren voneinander abgewandten Stirnseiten der Atmosphäre und auf ihren einander zugewandten Stirnseiten dem zu regelnden Fluid ausgesetzt sind.

11. Anordnung nach einem der Ansprüche 6 bis 10, dadurch gekennzeichnet, daß die beiden zylindrisch ausgebildeten Kolben (11, 13) den gleichen Durchmesser haben, so daß ihre fluidbeaufschlagten Flächen die gleiche Größe haben.

12. Anordnung nach einem der Ansprüche 6 bis 11, dadurch gekennzeichnet, daß jeder der beiden Kolben (11, 13) bezüglich seiner Bohrung (6, 7) durch eine elastische oder mit Gleitmittel versehene Dichtung (10) abgedichtet ist.

13. Anordnung nach einem der Ansprüche 6 bis 12, dadurch gekennzeichnet, daß die Doppelkolbenanordnung (11, 13) durch die Rückstellkraft in Schließrichtung und den Antrieb in Öffnungsrichtung bewegbar ist, wobei der vom Antrieb entfernte Kolben (11) als Verschlußglied zum regelbaren Öffnen und Schließen der Durchtrittsöffnung (4) ausgebildet ist.

14. Anordnung nach einem der Ansprüche 6 bis 13, dadurch gekennzeichnet, daß die Rückstellkraft durch eine Feder (15) erzeugt wird, die am Ventilgehäuse (1) abgestützt ist und an einem Ringbund (14) des dem Antrieb zugewandten Kolbens (13) angreift.

15. Anordnung nach einem der Ansprüche 6 bis 14, dadurch gekennzeichnet, daß die Eintritts- und Austrittsöffnung (2, 3) als seitlich zueinander versetzte Bohrungen ausgebildet sind, deren Achsen auf der Längsachse der Kolbenanordnung (11, 13) senkrecht stehen und die durch die Durchtrittsöffnung (4) miteinander verbunden sind.

16. Anordnung nach einem der Ansprüche 6 bis 15, dadurch gekennzeichnet, daß einer (11) der beiden Kolben (11, 13) an seiner der Durchtrittsöffnung (4) zuge-wandten Stirnseite mit einer Ventildichtung (5) versehen ist, die mit einem die Durchtrittsöffnung (4) umgebenden Ventilsitz (37) zusammenwirkt.

17. Anordnung nach einem der Ansprüche 6 bis 16, dadurch gekennzeichnet, daß die Verbindungsstange (12) und die Durchtrittsöffnung (4) jeweils mit einer Dichtfläche versehen sind, die in der Schließstellung der Doppelkolbenanordnung (11, 13) zum Schließen der Durchtrittsöffnung (4) dichtend aneinander anliegen.

18. Anordnung nach einem der Ansprüche 6 bis 17, dadurch gekennzeichnet, daß das Ventilgehäuse (1) einteilig ausgebildet ist.

19. Anordnung nach einem der Ansprüche 6 bis 18, dadurch gekennzeichnet, daß das Ventilgehäuse (1) aus einem harten Material besteht.

20. Anordnung nach einem der Ansprüche 6 bis 19, dadurch gekennzeichnet, daß die Führungsflächen des Ventilgehäuses (1) und/oder der Doppelkolbenanordnung (11, 13) mit einem reibungsarmen Oberflächenschutz versehen sind.

21. Anordnung nach einem der Ansprüche 6 bis 20, dadurch gekennzeichnet, daß die Eintrittsöffnung (2) mit dem die Kraftstoffdämpfe führenden Inneren (6) der Kraftstoffleitung und die Austrittsöffnung (3) mit dem Kraftstofftank (1) verbunden sind.

## Claims

1. An arrangement for recovering hydrocarbon vapors in fuel filling systems having a proportional throttle valve (10) arranged in a vapor recovery line, said proportional throttle valve controlling the vapor volume flow rate flowing back to a tank (1) by means of a vacuum pump (12) in response to the volume flow rate of the fuel to be delivered and said proportional throttle valve to be controlled by an error signal which is defined by a desired value for the volume rate of the fuel and an actual value derived from measuring the vapor volume flow rate, and having a pressure sensor arranged upstream and downstream of the throttle area of said proportional throttle valve (10), wherein the actual value of the vapor volume flow rate is calculated from the pressure difference of said sensor and the throttle cross-sectional area.

2. The arrangement of claim 1, characterized in that the desired value is defined by a signal delivered by the electronic meter (3) of the fuel filling system.

3. The arrangement of claim 1 or 2, characterized in that a correcting factor for the desired value is adjustable for adjusting the ratio between the fuel volume flow rate and the vapor volume flow rate.

4. The arrangement of one of claims 1 to 3, characterized in that the controlling signal for the proportional throttle valve (10) is corrected in response to the atmospheric air pressure and/or the vacuum pressure.

5. The arrangement of one of claims 1 to 4, characterized in that the controlling signal for the proportional throttle valve (10) is corrected in response to the air temperature.

6. The arrangement of one of claims 1 to 5, characterized in that the valve member of the proportional throttle valve (10) is defined by a linearly slideable dual piston means including two pistons (11,13) which are slideably guided in aligned bores (6,7) of the valve housing (1) and which are connected by a connecting rod (12) extending through a through-opening (4), wherein the flow path in the area of the through-opening (4) and the connecting rod (12) is formed as a throttle limiting the maximum flow rate.

7. The arrangement of claim 6, characterized in that the dual piston means is connected to a replaceably arranged solenoid drive means through a force transferring member (18).

8. The arrangement of claim 7, characterized in that the valve housing (1) and the drive means are separated by an intermediate body (16) in which the drive connection between the force transferring member (18) and the dual piston means (11,13) is provided and to which the drive means is removably attached.

9. The arrangement of claim 7 or 8, characterized in that the intermediate body (16) is provided with openings (16a) connecting the inner space of the intermediate body (18) to atmosphere.

10. The arrangement of one of claims 6 to 9, characterized in that the front faces of both the pistons (11,13) facing away from each other are subjected to atmosphere and the front faces of the pistons facing each other are subjected to the fluid to be controlled.

11. The arrangement of one of claims 6 to 10, characterized in that both said pistons (11,13) are cylindrical and have the same diameter such that the areas subjected to said fluid are equal.

12. The arrangement of one of claims 6 to 11, characterized in that each of said pistons (11,13) is sealed with respect to its associated bore (6,7) by a resilient, or respectively, lubricated seal (10).

13. The arrangement of one of claims 6 to 12, characterized in that the dual piston means (11,13) is movable toward closing by the force of resetting means and toward opening by the drive means, wherein the piston (11) remote from said drive means is formed as a closing member for controllably opening and closing said through-opening (4).

14. The arrangement of one of claims 6 to 13, characterized in that the resetting force is produced by a spring (15) which is supported on the valve housing (1) and engages an annular flange (14) of the piston (13) facing said drive means.

15. The arrangement of one of claims 6 to 14, characterized in that the inlet and outlet opening (2,3) are formed as bores disposed laterally of each other and have axes that are vertical to the longitudinal axis of the dual piston means (11,13) and which openings are connected to each other by said through-opening (4).

16. The arrangement of one of claims 6 to 15, characterized in that one (11) of said both pistons (11,13) is provided with a valve seal (5) on the front face facing said through-opening, said valve seal cooperating with a valve seat (37) and encircling said through-opening (4).

17. The arrangement of one of claims 6 to 16, characterized in that the connecting rod (12) and the through-opening (4) each are provided with a sealing face, each of which sealingly engage each other in the closing position of the dual piston means (11,13) to close said through-opening (4).

18. The arrangement of one of claims 6 to 17, characterized in that the valve housing (1) is a one-piece housing.

19. The arrangement of one of claims 6 to 18, characterized in that the valve housing (1) is made of a hard material.

20. The arrangement of one of claims 6 to 19, characterized in that the guide surfaces of the valve housing (1) and/or the dual piston means (11,13) is provided with an anti-friction surface protection.

21. The arrangement of one of claims 6 to 20, characterized in that the inlet opening (2) is connected to the vapor flow inner section (6) of the fuel line and the outlet opening (3) is connected to the fuel tank (1).

## Revendications

1. Dispositif de récupération d'hydrocarbures dans des installations de remplissage en carburant, comportant une vanne d'étranglement proportionnelle (10) disposée dans une conduite de récupération de vapeurs, qui régule en fonction du débit du carburant de remplissage le débit des gaz refluant vers un réservoir (1) à l'aide d'une pompe à vide (12) et peut être commandé par un signal d'erreur formé à partir d'une valeur réelle mesurant la valeur de consigne du débit du carburant et une valeur réelle mesurant le débit des gaz et d'un capteur de pression disposé en amont et en aval du point d'étranglement de la vanne d'étranglement proportionnelle (10), la valeur réelle du débit des gaz étant calculée à partir de la différence de pression relevée par le capteur et de la section d'étranglement.

2. Dispositif selon la revendication 1, caractérisé en ce que la valeur de consigne est un signal délivré par le compteur électronique (3) de l'installation de remplissage.

3. Dispositif selon la revendication 1 ou 2, caractérisé en ce que le réglage du rapport entre le débit du carburant et le débit des gaz peut s'effectuer en ajustant un facteur de correction de la valeur de consigne.

4. Dispositif selon l'une des revendications 1 à 3, caractérisé en ce que le signal de commande de la vanne d'étranglement proportionnelle (10) est corrigé en fonction de la pression atmosphérique et/ou de la pression du vide.

5. Dispositif selon l'une des revendications 1 à 4, caractérisé en ce que le signal de commande de la vanne d'étranglement proportionnelle (10) est corrigé en fonction de la température de l'air.

6. Dispositif selon l'une des revendications 1 à 5, caractérisé en ce que le tiroir de la vanne d'étranglement proportionnelle (10) est conçu comme un système à double piston à déplacement linéaire comportant deux pistons (11, 13) coulissant dans des alésages (6, 7) alignés l'un par rapport à l'autre du corps de vanne (1) et reliés l'un à l'autre par une tige de liaison traversant l'orifice de passage (4), la voie d'écoulement située dans la zone de l'orifice de passage (4) et de la tige de liaison (12) étant conçue comme étranglement limitant le débit maximal d'écoulement.

7. Dispositif selon la revendication 6, caractérisé en ce que le dispositif à double piston est relié par un organe de transmission (18) au mécanisme d'entraînement électromagnétique interchangeable.

8. Dispositif selon la revendication 7, caractérisé en ce que le corps de vanne (1) et le mécanisme d'entraînement sont séparés spatialement l'un de l'autre par un corps intermédiaire (16) qui contient la liaison d'entraînement entre l'organe de transmission (18) et le dispositif à double piston (11, 13) et sur lequel le mécanisme d'entraînement est monté de manière amovible.

9. Dispositif selon la revendication 7 ou 8, caractérisé en ce que le corps intermédiaire (16) est doté d'orifices (16a) reliant l'intérieur du corps intermédiaire (16) à l'atmosphère.

10. Dispositif selon l'une des revendications 6 à 9, caractérisé en ce que les deux pistons (11, 13) sont exposés à l'atmosphère par leurs faces opposées l'une à l'autre et au fluide à réguler par leurs faces tournées l'une vers l'autre.

11. Dispositif selon l'une des revendications 6 à 10, caractérisé en ce que les deux pistons (11, 13) sont cylindriques et ont le même diamètre de sorte que leurs surfaces soumises au fluide ont la même dimension.

12. Dispositif selon l'une des revendications 6 à 11, caractérisé en ce que chacun des deux pistons (11, 13) est rendu étanche dans son alésage (6, 7) par un joint (10) élastique ou doté d'un moyen antifriction.

13. Dispositif selon l'une des revendications 6 à 12, caractérisé en ce que le système à double piston (11, 13) peut être mû par la force de rappel dans le sens de la fermeture et par le mécanisme d'entraînement dans le sens de l'ouverture, le piston (11) éloigné du mécanisme d'entraînement étant conçu comme un organe de fermeture permettant de réguler l'ouverture et la fermeture de l'orifice de passage (4).

14. Dispositf selon l'une des revendications 6 à 13, caractérisé en ce que la force de rappel est générée par un ressort (15) qui s'appuie sur le corps de vanne (1) et agit sur une collerette annulaire (14) du piston (13) tourné vers le mécanisme d'entraînement.

15. Dispositif selon l'une des revendications 6 à 14, caractérisé en ce que les orifices d'entrée et de sortie (2, 3) sont conçus comme des perçages décalés latéralement l'un par rapport à l'autre dont les axes sont perpendiculaires à l'axe longitudinal du dispositif à pistons (11, 13) et reliés l'un à l'autre par l'orifice de passage (4).

16. Dispositif selon l'une des revendications 6 à 15, caractérisé en ce que un (11) des deux pistons (11, 13) est doté sur sa face tournée vers l'orifice de passage (4) d'un joint de vanne (5) qui coopère avec un siège de vanne (37) entourant l'orifice de passage (4).

17. Dispositif selon l'une des revendications 6 à 16, caractérisé en ce que la tige de liaison (12) et l'orifice de passage (4) sont chacun pourvus d'une surface d'étanchéité qui, en position de fermeture du système à double piston (11, 13), sont appliquées l'une contre l'autre de manière étanche pour fermer l'orifice de passage (4).

18. Dispositif selon l'une des revendications 6 à 17, caractérisé en ce que le corps de vanne (1) est conçu d'une seule pièce.

19. Dispositif selon l'une des revendications 6 à 18, caractérisé en ce que le corps de vanne (1) est composé d'un matériau dur.

20. Dispositif selon l'une des revendications 6 à 19, caractérisé en ce que les surfaces de guidage du corps de vanne (1) et/ou du dispositif à double piston (11, 13) sont dotées d'un revêtement de surface protecteur antifriction.

21. Dispositif selon l'une des revendications 6 à 20, caractérisé en ce que l'orifice d'entrée (2) est relié à la partie interne (6) de la conduite de carburant amenant les vapeurs d'hydrocarbures et en ce que l'orifice de sortie (3) est relié au réservoir de carburant (1).
